# EUROPÄISCHE PATENTANMELDUNG

(11) **EP 0 657 344 A1**
(43) Veröffentlichungstag der Anmeldung: **14.06.1995**
(21) Anmeldenummer: 94118137.2
(22) Anmeldetag: 17.11.1994
(51) Int. Cl.: B62M 1/16

(54) **Radfahrzeug mit Vorderradantrieb**

(30) Priorität: 13.12.1993 DE 9319101 U
(71) Anmelder: Strasser, Siegfried, D-33014 Bad Driburg (DE)
(72) Erfinder: Uhlmann, Georg, D-56076 Koblenz (DE)
(74) Vertreter: Grünecker, Kinkeldey, Stockmair & Schwanhäusser Anwaltssozietät

(57) **Zusammenfassung**

Es wird ein Radfahrzeug beschrieben, das wenigstens ein gelenktes, vorn am Radfahrzeug liegendes und wenigstens ein ungelenktes, hinten am Radfahrzeug liegendes Hauptfahrzeugrad (4, 7) aufweist. Das Vorderrad (4) enthält einen Lagerkörper (2), der ein Verbindungsteil (6) zum Hinterrad (7) aufweist. Es ist ein von Hand zu bedienender Lenker (3) für das Vorderrad (4) vorgesehen. Um das Radfahrzeug durch den Einsatz der Arme und Hände des Fahrers antreiben zu können, wird vorgeschlagen, das Vorderrad (4) mit einem Freilaufgesperre (34) zu versehen und den Lenker um eine zur geometrischen Drehachse des Vorderrades (4) parallele geometrische Schwenkachse hin- und hergehend schwenkbar am Lagerkörper (2) zu lagern und mit dem Vorderrad (4) antreibbar zu verbinden.

## Beschreibung

### Stand der Technik

Die Erfindung betrifft ein durch den Fahrer antreibbares Radfahrzeug, welches wenigstens ein gelenktes, vorn am Radfahrzeug liegendes, und wenigstens ein unglenktes, hinten am Radfahrzeug liegendes Hauptfahrzeug (Vorderrad bzw. Hinterrad) aufweist, welches weiterhin mit einem Verbindungsteil zwischen dem Lagerkörper und dem Hinterrad versehen ist und welches schließlich einen von Hand bedienenden Lenker für das Vorderrad aufweist.

Radfahrzeuge mit den vorstehend aufgeführten Merkmalen sind in unterschiedlichen Ausführungsformen bekannt, z.B. in Form von Zweirädern als sogenannte Roller - insbesondere für Kinder - oder rollerähnliche Fahrzeuge oder als sogenannte Fahrräder. Diese beiden Ausführungsformen von Radfahrzeugen weisen zwei Hauptfahrzeugräder auf, von denen üblicherweise das Vorderrad lenkbar ist, während das Hinterrad auf einer starren Achse gelagert ist. Allerdings sind auch Varianten dieser Radfahrzeuge bekannt, bei denen außer den erwähnten, als Hauptfahrzeugräder zu betrachtenden beiden vorgenannten Rädern zusätzlich noch Stützräder oder dgl. vorgesehen sind, wie es von Kinderfahrrädern her bekannt ist.

Weitere, ebenfalls für den Antrieb durch den Fahrer vorgesehene Radfahrzeuge weisen beispielsweise drei Hauptfahrzeugräder auf, von denen üblicherweise das Vorderrad lenkbar ist, während die beiden Hinterräder auf einer starren Achse geführt sind (sogenannte Dreiräder).

Schließlich sind für den Antrieb durch den Fahrer vorgesehene Radfahrzeuge mit insgesamt vier Hauptfahrzeugrädern bekannt; diese Fahrzeuge - weisen einen auf einem Rahmengestell befestigten Sitz für den Fahrer auf, so daß dieser zum einen durch entsprechende Bewegungen der Beine und Füße das Fahrzeug antreiben kann und durch entsprechende Bewegungen der Arme und Hände das Fahrzeug lenken kann.

### Aufgabe

Der vorliegenden Erfindung liegt die Aufgabe zugrunde, ein Radfahrzeug zu schaffen, welches durch Einsatz der Arme und Hände des Fahrers angetrieben werden kann.

### Lösung

Zur Lösung der vorstehend genannten Aufgabe schlägt die vorliegende Erfindung bei einem Radfahrzeug mit den eingangs aufgeführten Merkmalen vor, daß für den Antrieb des Radfahrzeuges durch den Fahrer das Vorderrad mit einem Freilaufgesperre versehen ist und der Lenker um eine zur geometrischen Drehachse der Vorderrades parallele geometrische Schwenkachse hin- und hergehend schwenkbar am Lagerkörper gelagert ist und mit dem Vorderrad antriebsverbunden ist.

Die Lösung nach der Erfindung wird bevorzugt angewendet bei einem Radfahrzeug, welches nach Art eines Rollers ausgeführt ist. Jedoch kann die Erfindung selbstverständlich auch angewendet werden bei Radfahrzeugen, die im Gegensatz zu einem Roller einen Rahmen - wie z.B. bei einem Fahrrad üblich - aufweisen, oder die nicht nur zwei, sondern beispielsweise drei Hauptfahrzeugräder nach Art eines sogenannten Dreirades und/oder die eine Sitzgelegenheit für den Fahrer aufweisen.

Grundsätzlich ist es möglich, den Lenker um eine Schwenkachse schwenkbar am Lagerkörper zu lagern, die - im Extremfall - mit der geometrischen Drehachse des Vorderrades zusammenfällt. In bevorzugter weiterer Ausgestaltung der Erfindung schlägt Anspruch 2 allerdings vor, daß der Lenker um eine mit Abstand oberhalb der Drehachse des Vorderrades liegende Schwenkachse schwenkbar am Lagerkörper gelagert ist. Hierdurch kann eine einerseits an die ergonomischen Gegebenheiten eines Menschen bestmöglich angepaßte und zum anderen im Hinblick auf die Benutzungsweise bestgeeignete Konstruktion des Radfahrzeuges geschaffen werden.

Weitere vorteilhafte Ausgestaltungen der Erfindung sind in den Unteransprüchen 3 bis 26 angegeben.

Die Lösung nach Anspruch 3 ermöglicht nicht nur eine gelenkige Verbindung zwischen dem Lagerkörper mit Vorderrad und Lenker einerseits und dem Verbindungsteil mit Hinterrad andererseits, sondern bildet darüber hinaus und zweckmäßigerweise auch die Lenkachse für das Vorderrad. Die Lenkachse verläuft dabei - bei aufrechtstehendem Radfahrzeug - in lotrechter oder im wesentlichen lotrechter Richtung.

Eine besonders bevorzugte Ausgestaltung des erfindungsgemäßen Radfahrzeuges - nämlich diejenige nach Art eines Rollers - ist in Anspruch 4 angegeben.

Um das Radfahrzeug bei Nichtgebrauch auf möglichst geringem Raum unterbringen zu können, wird eine weitere Ausgestaltung gemäß Anspruch 5 vorgeschlagen.

Insbesondere für den Fall der Ausführung des Radfahrzeuges als Zweirad, z.B. als Roller, ist der Lenker zweckmäßig entsprechend dem Vorschlag nach Anspruch 6 ausgebildet. Dabei kann der aus Lenkstange und Lenkstangenschaft bestehende Lenker einteilig sein. Eine andere mögliche Ausführung, nämlich zweiteilig, ist in Anspruch 7 angegeben.

Der für den vorderen Teil des Radfahrzeuges vorgesehene, zum einen den Lenker und zum anderen das Vorderrad tragende Lagerkörper ist bevorzugt entsprechend dem Vorschlag nach Anspruch 8 ausgebildet. In zweckmäßiger Ergänzung dieser Lösung bilden nach Anspruch 9 die stabförmigen Elemente am einen Ende eine Gabel zur Aufnahme der Achse des Vorderrades und weisen am anderen Ende Lagerstellen auf zur Aufnahme eines die Schwenkachse für den Lenker bildenden Achs- oder Wellenkörpers.

Im Hinblick auf die Übertragung der Antriebskräfte vom Lenker zum Vorderrad gibt Anspruch 10 eine bevorzugte Lösung an. Hierbei ist es zweckmäßig, für die in Verbindung mit den Antriebselementen vorgesehene Antriebskette nach Maßgabe des Anspruches 11 Spannmittel im oder am Lagerkörper anzuordnen. Als Spannmittel wird dabei vorzugsweise ein im Lagerkörper entsprechend einstellbar gelagertes Zahnrad verwendet, wie es in Anspruch 12 angegeben ist.

Gemäß Anspruch 13 ist zweckmäßig das Verbindungsteil an einem der Gelenkverbindung benachbarten Ort mit Teilen der Gelenkverbindung lösbar verbunden.

Die weitere Ausgestaltung des Verbindungsteils im Bereich der Verbindungsteile mit dem Ansatzstück der Gelenkverbindung gemäß Anspruch 14 ermöglicht auf relativ kostengünstige Weise unter Verwendung handelsüblicher Halbfertigfabrikate eine gegen relative Schwenk- oder Drehbewegungen von Verbindungsteil und Ansatzstück an der Verbindungsstelle gesicherte Verbindung dieser Teile miteinander.

Ferner ist nach dem Vorschlag gemäß Anspruch 15 zweckmäßig ein von Hand betätigbares Verriegelungselement im Verbindungsbereich des Ansatzstückes der Gelenkverbindung mit dem Verbindungsteil vorgesehen, so daß die beiden Teile - also Lagerkörper mit Lenker und Vorderrad bzw. Verbindungsteil mit Hinterrad- des Radfahrzeuges schnell und einfach voneinander getrennt oder miteinander verbunden werden können.

In weiterer zweckmäßiger Ausgestaltung des erfindungsgemäßen Radfahrzeuges, insbesondere im Fall eines rollerartig ausgeführten Radfahrzeuges, ist dieses entsprechend den in Anspruch 16 angegebenen Merkmalen mit einem Bremselement versehen.

Im Hinblick auf möglichst kostengünstige Herstellung unter weitgehender Verwendung handelsüblicher Bauelemente und Halbfertigfabrikate (z.B. sogenannter "Profile") nennt Anspruch 17 weitere zweckmäßige Merkmale für die Ausführung des Verbindungsteils des Radfahrzeuges. Ergänzend hierzu kann zur Bildung eines Trittbretts eine entsprechende Auflage gemäß Anspruch 18 für das Verbindungsteil vorgesehen sein.

Als Abstützung und insbesondere als Schutz gegen vom Vorderrad aufgewirbelten und/oder in Richtung auf das Verbindungsteil zu geschleuderten Schmutz ist die in Anspruch 18 genannte Auflage gemäß dem Vorschlag nach Anspruch 19 weitergebildet.

Zur Begrenzung der Schwenkbewegung des Lenkers, also zur Bestimmung der beiden Endpunkte des maximal möglichen Schwenkbereiches, sind nach Anspruch 20 Anschläge für den Lenker, nämlich für den Lenkstangenschaft, am Lagerkörper des Radfahrzeuges vorgesehen. Dabei ist der Schwenkbereich des Lenkers bevorzugt so eingerichtet, daß dieser entsprechend dem Vorschlag nach Anspruch 21 die Lotrechte einschließt. Allerdings ist auch eine Wahl der Lage des Schwenkbereiches derart möglich, daß zum Antrieb des Fahrzeuges anstelle einer im wesentlichen auf den Oberkörper des Fahrers zu gerichteten, ziehenden Bewegung wie bei dem Ausführungsbeispiel nach der Zeichnung eine im wesentlichen auf- oder abwärts gerichtete Bewegung des Lenkers erfolgt.

Für die Übertragung der Antriebskräfte vom Lenker zum Vorderrad sind verschiedene Lösungen möglich; eine bevorzugte Lösung ist in Anspruch 22 angegeben. Der danach bestehende seitliche Abstand der Antriebskette vom Verlauf der geometrischen Lenkachse bewirkt, daß ein größerer und jedenfalls ausreichender Schwenkbereich des Lagerkörpers mit dem Vorderrad um die Lenkachse möglich ist, ohne daß dabei Elemente des Antriebs - im vorliegenden Fall insbesondere die Antriebskette - und Elemente der Lenkung - im vorliegenden Fall der Lenkbolzen für die Gelenkverbindung mit Lagerstellen - miteinander in Berührung kommen können bzw. sich gegenseitig behindern.

In weiterer Ausgestaltung der Antriebslösung gemäß Anspruch 22 schlägt Anspruch 23 weitere Details für den Antriebszug zum Vorderrad vor.

Nicht nur aus ästhetischen Gründen, sondern auch zum Schutz der Antriebselemente im Bereich des Lagerkörpers und zum Schutz des Fahrers vor Verletzungen und/oder Verschmutzungsgefahr wiest das Radfahrzeug gemäß den Ansprüchen 24, 25 und 26 eine oder mehrere entsprechende Verkleidungen für die betreffenden Elemente des Radfahrzeuges auf.

Wenn auch das erfindungsgemäße Radfahrzeug als Zweirad und bevorzugt als sogenannter Roller ausgebildet ist, so kann die Erfindung doch außerdem für Radfahrzeuge mit drei Hauptfahrzeugrädern (sogenannte Dreiräder) angewendet werden.

Schließlich ist auch eine Ausführungsform mit insgesamt vier Hauptfahrzeugrädern denkbar, von denen dann zwei Hauptfahrzeugräder, nämlich die Vorderräder, lenk- und antreibbar ausgeführt sind.

### Erläuterung eines Ausführungsbeispiels

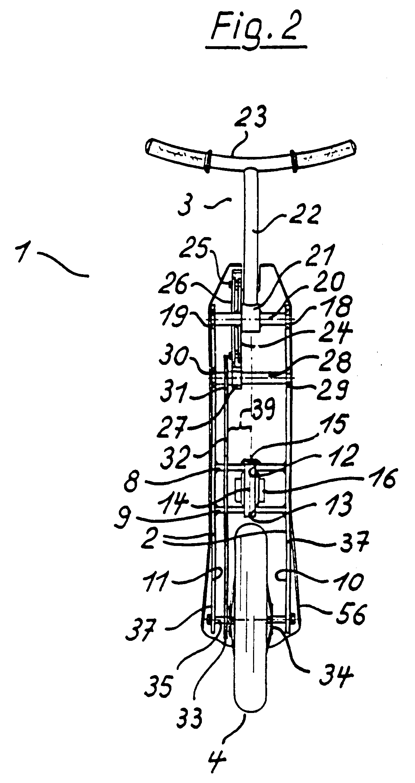

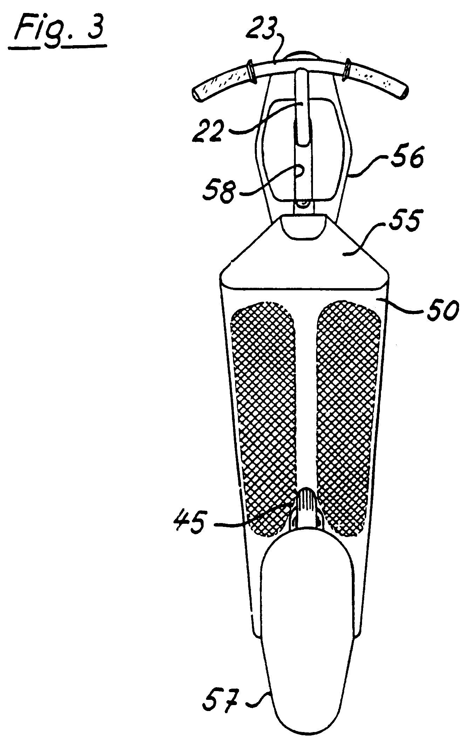

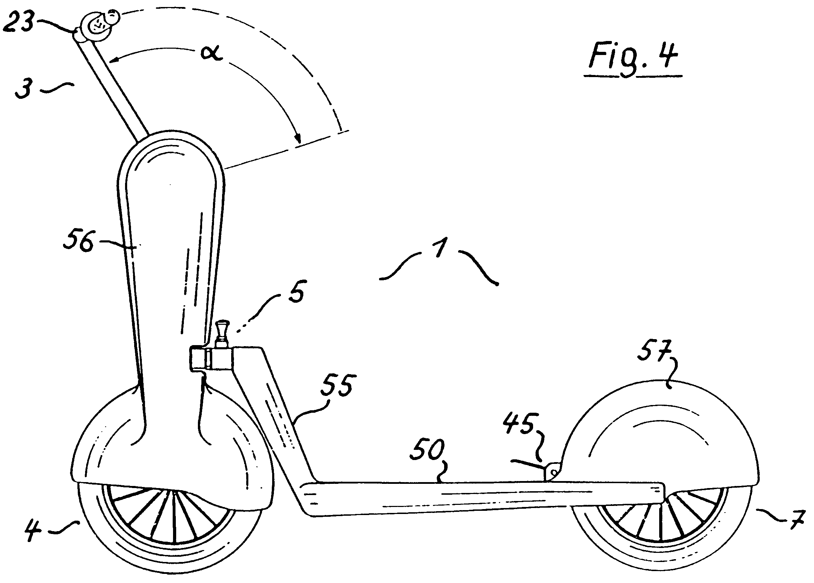

Anhand der Figuren 1 bis 4 der Zeichnung wird die Erfindung im folgenden an einem Ausführungsbeispiel näher erläutert.

Es zeigen
- Fig. 1: ein erfindungsgemäßes Radfahrzeug nach Art eines Rollers in der Seitenansicht und teilweise im Schnitt entsprechend Schnittlinie I-I in Fig. 3,
- Fig. 2: den Roller nach Fig. 1 in der Vorderansicht und teilweise im Schnitt entsprechend Schnittlinien II-II in Fig. 1,
- Fig. 3: den Roller nach den Fig. 1 und 2 in der Aufsicht, und
- Fig. 4: den Roller nach den Fig. 1 bis 3 in der Seitenansicht mit Darstellung von Verkleidungen für Elemente des Rollers.

Die Zeichnung zeigt einen Roller 1, der im wesentlichen aus einem Lagerkörper 2 mit einem Lenker 3 und einem Vorderrad 4 sowie einem über eine Gelenkverbindung 5 an den Lagerkörper 2 anschließenden Verbindungsteil 6 mit einem am hinteren Ende des Verbindungsteils 6 gelagerten Hinterrad 7 besteht.

Der Lagerkörper 2 besteht aus zwei parallel mit vorbestimmtem Abstand zueinander angeordneten, mittels Verbindungsstücken 8 und 9 starr miteinander verbundenen stabförmigen Elementen 10 und 11. Die Verbindungsstücke 8, 9 weisen jeweils eine Bohrung 12 bzw. 13 auf, welche Bohrungen 12, 13 miteinander fluchten und einen Lenkbolzen 14 aufnehmen. Der Lenkbolzen 14 liegt mit seinem mit 15 bezeichneten Bolzenkopf auf der oberen, nicht näher bezeichneten Seite des im Lagerkörper oben liegenden Verbindungsstücks 8 auf. Ferner ist achsgleich zum Lenkbolzen 14 zwischen den Verbindungsstücken 8, 9 eine Buchse 16 angeordnet, die sich auf dem Lenkbolzen 14 um die mit diesem gemeinsame, nicht näher bezeichnete Längsachse schwenkbar führt.

Mit der Buchse starr verbunden ist ein Ansatzstück 17, das aus einem rohrförmigen, vorzugsweise einen rechteckigen, insbesondere quadratischen Querschnitt aufweisenden Halbfertigfabrikat ("Profil") hergestellt ist. Die Lager für den Lenkbolzen 14 - nämlich die Verbindungsstücke 8, 9 - der Lenkbolzen 14, die Buchse 16 und das Ansatzstück 17 bilden die erwähnte Gelenkverbindung 5 zwischen Lagerkörper 2 und Verbindungsteil 6 des Rollers.

Zwischen den stabförmigen Elementen 10, 11 ist an deren oberem Ende in Wälzlagern 18, 19 eine Schwenkwelle 20 schwenkbar gelagert. Drehfest verbunden mit der Schwenkwelle 20 ist eine Lagerhülse 21, die sich am unteren Ende des mit 22 bezeichneten und mit diesem fest verbundenen Lenkstangenschaftes des Lenkers 3 befindet. An dem der Lagerhülse 21 gegenüberliegenden Ende des Lenkstangenschaftes 22 ist an diesem die mit 23 bezeichnete, Griffhülsen aufweisende Lenkstange des Lenkers 3 befestigt.

Mit der Lagerhülse 21 ist eine Lagerscheibe 24 starr verbunden, an der - achsgleich mit der Schwenkwelle 20 - über Schraubenbolzen 25 und in der Lagerscheibe 24 vorgesehene, nicht näher bezeichnete Gewindebohrungen für die Schraubenbolzen 25 ein Zahnrad 26 befestigt ist.

Das Zahnrad 26 kämmt mit einem Ritzel 27, das mit einer Ritzelwelle 28 drehfest verbunden ist, die in den stabförmigen Elementen 10, 11 befindlichen Wälzlagern 29, 30 um ihre Längsachse drehbeweglich gelagert ist.

Mit der Ritzelwelle 28 drehfest verbunden ist ferner ein Zahnrad 31, welches über eine Antriebskette 32 mit einem Zahnrad 33 antriebsverbunden ist. Das Zahnrad 33 ist auf dem nicht näher bezeichneten Gewindekopf eines im Vorderrad 4 vorgesehenen Freilaufgesperres 34 befestigt, dessen mit 35 bezeichnete Achse die Vorderradachse des Rollers 1 bildet und in nach unten zu offenen, nicht näher dargestellten und bei Zweirädern an sich bekannten Ausnehmungen des mit 37 bezeichneten gabelartigen Endes des - hier von den stabförmigen Elementen 10, 11 gebildeten - Lagerkörpers 2 auf an sich bekannte Weise gehalten ist.

Als Spannmittel zum Einstellen der gewünschten Kettenspannung der Antriebskette 32 dient ein nicht dargestelltes Zahnrad, welches am stabförmigen Element 11 quer zur Längsausdehnung des benachbarten, nicht näher bzeichneten Trums der Antriebskette 32 einstellbar gelagert ist.

Zur Führung und Lagerung der Antriebskette 32 ist weiter zu bemerken, daß diese mit einem solchen seitlichen Abstand 39 - bezogen auf die Längsrichtung des Rollers 1 - von der durch den Lenkbolzen 14 gebildeten Lenkachse zu den einzelnen Elementen der Gelenkverbindung 5 im Lagerkörper 2 angeordnet ist, daß eine Behinderung der Bewegung der Antriebskette 32 selbst bei größtmöglichem Einschlag des Vorderrades 4 in die betreffende Endstellung ausgeschlossen ist.

Die Anordnung der Schwenkwelle 20 des Lenkers 3 zur Achse 35 des Vorderrades 4 ist derart getroffen, daß die geometrische Schwenkachse der Schwenkwelle 20 parallel zur geometrischen Drehachse des Vorderrades 4 verläuft.

Mit dem Ansatzstück 17 verbunden ist das eine, nicht näher bezeichnete Ende des Verbindungsteils 6, welches im vorliegenden Fall als Trägerrohr 40 mit rechteckigem Querschnitt ausgeführt ist. Das betreffende, nach oben zu abgekröpfte und in einen etwa horizontal auslaufenden Bereich übergehende Ende des Trägerrohres 40 ist mit dem betreffenden Ende des Ansatzstückes 17 mittels eines Verriegelungselementes 41 fest verbunden. Im übrigen ist durch die korrespondierenden Querschnittsformen von Ansatzstück 17 und Trägerrohr 40 im Verbindungsbereich eine Relativbewegung dieser Teile um die gemeinsame Längsachse verhindert. - Das Verriegelungselement 41 ist gegen Federkraft lösbar, so daß die beiden Teile des Rollers 1 - nämlich zum einen der Lagerkörper 2 mit Lenker 3 und Vorderrad 4 und zum anderen das Verbindungsteil 6 mit Hinterrad 7 - voneinander getrennt werden können.

Das hintere, nicht näher bezeichnete Ende des im Ausführungsbeispiel nach der Zeichnung das Verbindungsteil 6 des Rollers 1 bildenden Trägerrohres 40 läuft in einen gabelförmigen Fortsatz 42 aus, der zur Lagerung der Achse des Hinterrades 7 nicht näher bezeichnete und ähnlich den zur Aufnahme der Achse des Vorderrades 4 vorgesehenen Ausnehmungen ausgeführte Ausnehmungen aufweist.

Am hinteren Ende des Trägerrohres 40 ist an einem auf dem Trägerrohr 40 befestigten Lagerbock 43 auf einer Lagerachse 44 ein Bremselement 45 für das Hinterrad 7 schwenkbar gelagert. Das Bremselement 45 hat die Form eines Bremshebels 46, dessen eines, nicht näher bezeichnetes Ende entgegen der Kraft einer Feder 47 zur Betätigung mit einem Fuß vorgesehen ist und dessen anderes Ende in eine mit dem Reifen des Hinterrades 7 in Bremskontakt bringbare Kontaktfläche 48 ausläuft.

Etwa vom Ansatzstück 17 bis zu der mit 49 bezeichneten Achse des Hinterrades 7 reicht eine Auflage 50, die auf dem Trägerrohr 40 liegend an diesem und/oder an nicht näher dargestellten Querstücken des Trägerrohres 40 befestigt ist. Die Auflage 50 läuft nach vorn zu in eine Abdeckung 55 aus, die unter anderem als Schutz des Fahrers gegen vom Vorderrad aufgewirbelten Schmutz und dgl. dient.

Überdies weist der Roller 1 Verkleidungen 56 und 57 für den Lagerkörper 2 bzw. das Hinterrad 7 auf, die - neben einer vorteilhaften ästhetischen Wirkung - dem weiteren Schutz des Fahrers gegen Verschmutzungen und/oder Verletzungsgefahr dienen und die auch die damit verkleideten Teile des Rollers gegen unerwünschte Einwirkungen schützen. - Die für den Lagerkörper 2 vorgesehene Verkleidung 56 weist im oberen Bereich eine Öffnung 58 auf für den Durchtritt des Lenkstangenschaftes 22 des Lenkers 3.

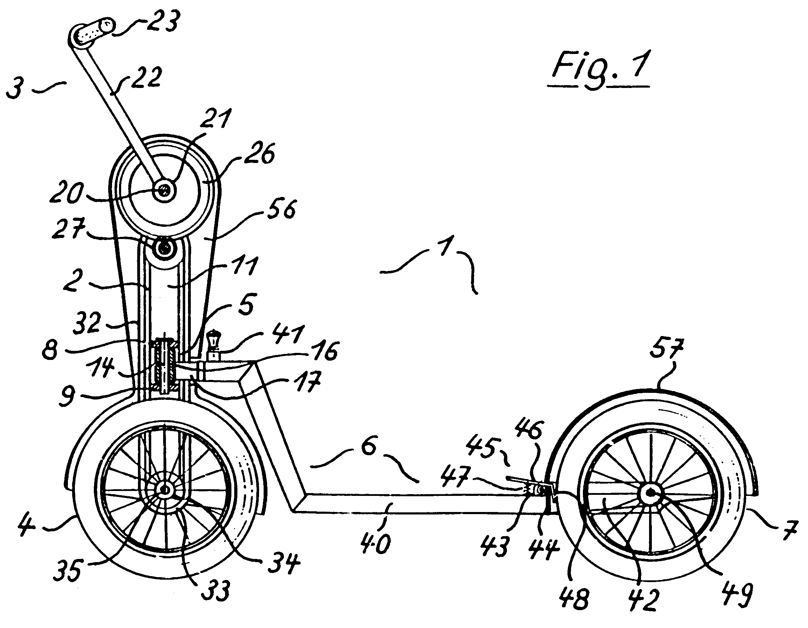

Zum Antrieb des Rollers 1 in Vorwärtsrichtung bewegt der Fahrer die Lenkstange 23 in den durch den möglichen Schwenkbereich des Lenkers 3 gegebenen Grenzen hin und her, wobei die eigentliche Antriebsbewegung bevorzugt in dem auf den Fahrer zu gerichteten Hub des Lenkers 3 liegt, während bei der Schwenkbewegung des Lenkers in entgegengesetzter Richtung das Freilaufgesperre 34 - mangels Wirkung einer Antriebskraft - entsperrt ist. - Die erwähnte Abdeckung 55 der ein Trittbrett bildenden Auflage 50 auf dem Trägerrohr 40 kann dabei als Stütze zum Abstützen eines Fußes des Fahrers dienen. - Im übrigen ist der gewählte Schwenkbereich des Lenkers 2 bzw. der Lenkstange 23 in Fig. 1 durch den Winkel angegeben, der die Lotrechte einschließt.

Weiterhin kann auch für das Vorderrad eine Bremse vorgesehen werden, die z.B. über einen Bowdenzug vom Lenker aus betätigt wird.

## Patentansprüche

1. Radfahrzeug,
a) mit wenigstens einem gelenkten, vorn am Radfahrzeug liegenden, und wenigstens einem ungelenkten, hinten am Radfahrzeug liegenden Hauptfahrzeugrad (Vorderrad (4) bzw. Hinterrad (7)),
b) mit einem Lagerkörper (2) für das Vorderrad (4),
c) mit einem Verbindungsteil (6) zwischen dem Lagerkörper (2) und dem Hinterrade (7),
d) und mit einem von Hand zu bedienenden Lenker (3) für das Vorderrad (4),
wobei für den Antrieb des Radfahrzeuges durch den Fahrer
e) das Vorderrad (4) mit einem Freilaufgesperre (34) versehen ist, und
f) der Lenker (3) um eine zur geometrischen Drehachse des Vorderrades (4) parallele geometrische Schwenkachse hin- und hergehend schwenkbar am Lagerkörper (2) gelagert ist und mit dem Vorderrad (4) antriebsverbunden ist.

2. Radfahrzeug nach Anspruch 1, **dadurch gekennzeichnet**, daß der Lenker (3) um eine mit Abstand oberhalb der geometrischen Drehachse des Vorderrades (4) liegende geometrische Schwenkachse schwenkbar am Lagerkörper (2) gelagert ist.

3. Radfahrzeug nach Anspruch 1, **dadurch gekennzeichnet**, daß der Lagerkörper (2) an einem zwischen der geometrischen Drehachse des Vorderrades (4) und der geometrischen Schwenkachse des Lenkers (3) liegenden Ort mit dem Verbindungsteil (6) über eine die Lenkachse bildende Gelenkverbindung (5) gelenkig verbunden ist.

4. Radfahrzeug nach Anspruch 3, **dadurch gekennzeichnet**, daß der Lagerkörper (2) mit Lenker (3) und Vorderrad (4) und das daran über die Gelenkverbindung (5) anschließende Verbindungsteil (6) mit Hinterrad (7) nach Art eines Rollers (1) ausgebildet sind mit einem zwischen dem Vorderrad (4) und dem Hinterrad (7) vorgesehenen trittbrettartigen Verbindungsteil (6).

5. Radfahrzeug nach Anspruch 1, **dadurch gekennzeichnet**, daß der Lagerkörper (2) mit dem Verbindungsteil (6) lösbar verbunden ist.

6. Radfahrzeug nach Anspruch 1, **dadurch gekennzeichnet**, daß der Lenker (3) von einer Lenkstange oder dgl. (23) mit einem nach unten zu daran anschließenden Lenkstangenschaft oder dgl. (22) gebildet ist.

7. Radfahrzeug nach Anspruch 6, **dadurch gekennzeichnet**, daß der Lenker (3) zweiteilig ausgeführt ist mit einander zugeordneten, jeweils aus Lenkstange und Lenkstangenschaft oder dgl. bestehenden Lenkerhälften.

8. Radfahrzeug nach Anspruch 1, **dadurch gekennzeichnet**, daß der Lagerkörper (2) von zwei mit Abstand zueinander angeordneten, starr miteinander verbundenen stabförmigen Elementen (10, 11) gebildet ist.

9. Radfahrzeug nach Anspruch 8, **dadurch gekennzeichnet**, daß die stabförmigen Elemente (10, 11) einenends ein gabelartiges Ende (37) bilden zur Aufnahme der Achse (35) des Vorderrades (4) und am anderen Ende Lagerstellen aufweisen zur Aufnahme eines die geometrische Schwenkachse für den Lenker (3) bildenden Achs- oder Wellenkörpers (Schwenkwelle 20).

10. Radfahrzeug nach Anspruch 1, **dadurch gekennzeichnet**, daß mit dem Lenker (3) ein um die geometrische Schwenkachse des Lenkers (3) schwenkbares Zahnrad oder Zahnsegment (26) drehfest verbunden ist, das über eine Antriebskette (32) enthaltende Antriebselemente mit dem Vorderrad (4) antriebsverbunden ist.

11. Radfahrzeug nach Anspruch 10, **dadurch gekennzeichnet**, daß Spannmittel für die Antriebskette (32) vorgesehen sind.

12. Radfahrzeug nach Anspruch 11, **dadurch gekennzeichnet**, daß als Spannmittel ein quer zur Längsausdehnung eines Kettentrums der Antriebskette (32) mit vorbestimmter Kraft gegen dieses einstellbare Zahnrad vorgesehen ist.

13. Radfahrzeug nach Anspruch 3 und 6, **dadurch gekennzeichnet**, daß das Verbindungsteil (6) an einem der Gelenkverbindung (5) benachbarten Ort mit Teilen der Gelenkverbindung (5) lösbar verbunden ist.

14. Radfahrzeug nach Anspruch 13, **dadurch gekennzeichnet**, daß das Verbindungsteil (6) an dem der Gelenkverbindung (5) benachbarten Ort rohrförmig mit eckigem Querschnitt ausgeführt ist und zur Aufnahme eines an der Gelenkverbindung (5) befindlichen Ansatzstückes (17) eingerichtet ist, dessen Querschnitt im Zusammenwirken mit dem Querschnitt des Verbindungsteils (6) an der betreffenden Stelle eine Relativbewegung von Ansatzstück (17) und Verbindungsteil 86) um eine gemeinsame Längsachse verhindert.

15. Radfahrzeug nach Anspruch 13, **gekennzeichnet durch** ein von Hand betätigbares Verriegelungselement (41) im Verbindungsbereich des Ansatzstückes (17) der Gelenkverbindung (5) mit dem Verbindungsteil (6).

16. Radfahrzeug nach Anspruch 1, **gekennzeichnet durch** ein am Verbindungsteil (6) schwenkbar gelagertes und gegen Federkraft mit dem Fuß betätigbares Bremselement (45) für das Hinterrad (7).

17. Radfahrzeug nach Anspruch 1, **dadurch gekennzeichnet**, daß das Verbindungsteil (6) aus einem Trägerrohr (40) besteht, dessen vorderes, nach oben zu geformtes Ende zur Verbindung mit dem Ansatzstück (17) der Gelenkverbindung (5) eingerichtet ist und dessen hinteres Ende in einen der Lagerung des Hinterrades dienenden gabelförmigen Fortsatz (42) ausläuft.

18. Radfahrzeug nach Anspruch 1, **gekennzeichnet durch** eine ein Trittbrett bildende Auflage (50) für das Verbindungsteil (6).

19. Radfahrzeug nach Anspruch 18, **dadurch gekennzeichnet**, daß die Auflage (50) in ihrem vorderen Bereich in eine nach oben zu gerichtete Abdeckung (55) ausläuft.

20. Radfahrzeug nach Anspruch 1, **dadurch gekennzeichnet**, daß Anschläge am Lagerkörper (2) vorgesehen sind zur Begrenzung des Schwenkbereiches des Lenkers (3).

21. Radfahrzeug nach Anspruch 1, **dadurch gekennzeichnet**, daß der Schwenkbereich des Lenkers (3) die Lotrechte einschließt.

22. Radfahrzeug nach Anspruch 10, **dadurch gekennzeichnet**, daß die Antriebskette (32), bezogen auf die Längsrichtung des Radfahrzeuges, mit Abstand (39) seitlich neben der Lenkachse im oder am Lagerkörper (2) geführt ist.

23. Radfahrzeug nach Anspruch 22, **dadurch gekennzeichnet**, daß die Antriebskette (32) zum einen über ein mit dem Freilaufgesperre - Gewindekopf des Freilaufgesperres (34) - antriebsverbundenes Zahnrad (33) und zum anderen über ein Zahnrad (31) geführt ist, welches über ein mit diesem Zahnrad (31) achsgleich und drehfest verbundenes weiteres Zahnrad (Ritzel 27) mit dem lenkerseitig vorgesehenen Zahnrad bzw. Zahnsegment (26) antriebsverbunden ist.

24. Radfahrzeug nach Anspruch 1, **gekennzeichnet durch** eine die Antriebselemente abdeckende Verkleidung (56) für den Lagerkörper (2).

25. Radfahrzeug nach Anspruch 1, **gekennzeichnet durch** eine den jeweils oberen Bereich abdeckende Verkleidung (56 bzw. 57) für das vordere und/oder hintere Hauptfahrzeugrad (Vorderrad 4 bzw. Hinterrad 7).

26. Radfahrzeug nach Anspruch 24 und 25, **dadurch gekennzeichnet**, daß die Verkleidung (56) für den Lagerkörper (2) mit der Verkleidung (56) für das Vorderrad (4) einstückig ausgeführt ist.
